# FASCICULE DE BREVET EUROPEEN

(11) **EP 3 761 835 B1**
(45) Date de publication et mention de la délivrance du brevet: **01.12.2021**
(21) Numéro de dépôt: 19707395.0
(22) Date de dépôt: 01.03.2019
(51) Int. Cl.: A47J 31/40, A47J 43/044

(54) **APPAREIL DE FABRICATION D'UNE BOISSON**
GETRÄNKEVORBEREITUNGSMASCHINE
BEVERAGE PREPARATION MACHINE

(30) Priorité: 05.03.2018 FR 1851867
(43) Date de publication de la demande: 13.01.2021
(73) Titulaire: Kuantom, 75005 Paris (FR)
(72) Inventeur: LECOMTE, Valentin, 91540 MENNECY (FR); MARTINS, Geoffrey, 95240 CORMEILLES-EN-PARISIS (FR)
(74) Mandataire: Nony
(86) Numéro de dépôt international: PCT/EP2019/055177
(87) Numéro de publication internationale: WO 2019/170549

(56) Documents cités:
- FR-A1- 2 987 252
- FR-A1- 3 048 171
- JP-A- 2003 275 102

## Description

### Domaine technique

L'invention concerne un appareil de fabrication d'une boisson à l'unité, et en particulier de fabrication de cocktails.

### Etat de la technique

Des appareils de fabrication de cocktails sont disponibles sur le marché. Ils permettent de mélanger des ingrédients contenus dans différents conteneurs amovibles afin de créer un cocktail.

De tels appareils sont notamment décrits dans WO12/128477 et JP 2003 275102 A.

Il existe un besoin pour un nouvel appareil de fabrication d'une boisson à l'unité, et en particulier d'un cocktail, qui soit plus robuste, plus compact, plus pratique à utiliser et moins coûteux à fabriquer que les appareils connus.

Un but de l'invention est de répondre, au moins partiellement, à ce besoin.

### Résumé de l'invention

L'invention propose un appareil de fabrication d'une boisson à l'unité selon la revendication 1.

Avantageusement, la compacité de l'appareil en est considérablement améliorée.

Dans un mode de réalisation préféré, l'arbre d'émulseur porte un palier d'axe X dans lequel, dans la position fermée uniquement, l'extrémité inférieure de l'arbre d'émulseur est guidée en rotation. La fonction de guidage exercée par le palier est donc désactivée dans la position ouverte. Avantageusement, le maintien de l'extrémité inférieure de l'arbre d'émulseur améliore la robustesse de l'appareil.

Dans la position fermée, l'arbre d'émulseur peut obturer l'orifice de sortie directement, ou indirectement, notamment par l'intermédiaire du palier.

De préférence, dans la position ouverte, le palier, solidaire de l'arbre d'émulseur, ne peut se déplacer, par rapport à l'arbre d'émulseur, que par rotation autour de l'axe X de l'arbre d'émulseur. De préférence, dans la position ouverte, le palier est entrainé en rotation par l'arbre d'émulseur.

Dans le mode de réalisation préféré, la surface intérieure de l'entonnoir est dépourvue d'aspérités susceptibles de gêner l'écoulement à travers l'orifice de sortie.

Dans la position fermée, le palier est de préférence maintenu immobile par rapport à l'entonnoir, par serrage contre l'entonnoir. De préférence, ce serrage résulte du passage de l'arbre d'émulseur de la position ouverte à la position fermée.

De préférence, l'extrémité inférieure de l'arbre d'émulseur porte un bouchon d'obturation, de préférence en un matériau élastomère, conformé pour, dans la position fermée, pénétrer dans l'orifice de sortie de l'entonnoir sur une profondeur supérieure à 1 mm, de préférence supérieure à 2 mm, 3 mm, 4 mm, 5 mm ou 6 mm.

Avantageusement, le bouchon d'obturation contribue ainsi au maintien en position de l'arbre d'émulseur, ce qui est particulièrement utile lorsque l'entonnoir est désassemblé de l'embase et/ou lorsque le couvercle de l'entonnoir est retiré et que l'arbre d'émulseur doit être positionné pour pouvoir fermer le couvercle de l'entonnoir.

De préférence, l'extrémité inférieure de l'arbre d'émulseur porte des ailettes, s'étendant de préférence sensiblement radialement par rapport à l'axe X de l'arbre d'émulseur, de préférence portées par le bouchon d'obturation, conformées pour limiter, dans la position ouverte, la formation de tourbillons lors de l'écoulement, à travers l'orifice de sortie de l'entonnoir, d'un mélange d'ingrédients contenu dans l'entonnoir.

De préférence, les ailettes sont conformées pour être logées, dans la position fermée, au moins partiellement dans l'orifice de sortie de l'entonnoir, de préférence sur une profondeur supérieure à 1 mm, 2 mm, 3 mm, 4 mm, 5 mm, ou 6 mm.

De préférence encore, les ailettes sont conformées de manière à s'opposer à leur introduction dans l'orifice de sortie. Autrement dit, une introduction en force est requise à cet effet. Avantageusement, le maintien en position de l'arbre d'émulseur dans la position fermée est renforcé.

De préférence, le palier comporte une bague extérieure d'un roulement dont la bague intérieure est fixée rigidement sur l'arbre d'émulseur. Avantageusement, le maintien, par le palier, de l'extrémité inférieure de l'arbre d'émulseur n'augmente sensiblement pas l'énergie nécessaire à la rotation de l'arbre d'émulseur.

De préférence toujours, la bague extérieure dudit roulement est comprimée élastiquement par une jupe définie par le bouchon d'obturation dans laquelle ladite bague extérieure est insérée. Avantageusement, la jupe protège le roulement. Par ailleurs, elle permet une fixation très simple de la bague extérieure.

Dans un mode de réalisation dans lequel le palier, en particulier la bague extérieure du roulement, est maintenu par une jupe du bouchon d'obturation, le frottement du bouchon d'obturation sur l'entonnoir et le frottement de la jupe sur le palier, en particulier la bague extérieure, sont adaptés pour, dans la position fermée, immobiliser le palier, en particulier la bague extérieure, par rapport à l'entonnoir.

L'actionneur comporte de préférence :
- un support sur lequel le moteur d'entraînement de l'arbre d'émulseur est fixé, ledit support étant monté coulissant sur l'embase, de préférence parallèlement à l'axe X de l'arbre d'émulseur, et définissant un chemin de came incliné par rapport audit axe X, c'est-à-dire ni parallèle, ni perpendiculaire audit axe ;
- un moteur d'actionneur, fixé rigidement sur l'embase, comportant un arbre d'actionneur mécaniquement couplé à un suiveur de came en appui glissant sur le chemin de came de manière qu'un glissement du suiveur de came sur le chemin de came entraîne un coulissement dudit support dans un premier sens, de préférence vers le haut.

**Selon un deuxième aspect principal** de l'invention, l'arbre d'émulseur est couplé en translation, suivant l'axe de l'arbre d'émulseur, avec l'arbre du moteur d'entraînement au moyen d'une attache, de préférence magnétique, désactivable par une traction sur l'arbre d'émulseur suivant son axe.

Comme on le verra plus en détail dans la suite de la description, l'arbre d'émulseur peut être ainsi démonté, ce qui facilite son nettoyage.

De préférence, l'entonnoir comporte un bol et un couvercle d'obturation du bol traversé par une ouverture, l'extrémité supérieure de l'arbre d'émulseur étant logée, au moins partiellement, dans l'ouverture quelle que soit la position de l'arbre d'émulseur entre la position fermée et la position ouverte, l'ouverture étant conformée pour limiter le déplacement de l'arbre d'émulseur perpendiculairement à son axe. Dans un mode de réalisation préféré, l'ouverture présente une forme sensiblement complémentaire à la forme de l'extrémité supérieure de l'arbre d'émulseur, de préférence une forme circulaire.

De préférence encore, l'extrémité supérieure de l'arbre d'émulseur comporte une jupe cylindrique logée dans ladite ouverture, quelle que soit la position de l'arbre d'émulseur entre la position fermée et la position ouverte.

Avantageusement, l'arbre d'émulseur peut être ainsi maintenu en position dans l'entonnoir lorsque ce dernier est démonté de l'embase.

De préférence, l'extrémité supérieure de l'arbre d'émulseur est couplée en rotation, autour de l'axe de l'arbre d'émulseur, avec l'arbre d'entraînement, au moyen d'un crabot. Avantageusement, l'accouplement en rotation entre l'arbre d'émulseur et l'arbre d'entraînement est efficace et ne nécessite pas un pré-positionnement angulaire.

**Selon un troisième aspect** de l'invention, l'entonnoir comporte, comme décrit ci-dessus, un bol et un couvercle d'obturation du bol, et le couvercle est fixé de manière amovible sur le bol, de préférence par insertion d'oreilles du couvercle dans des rainures correspondantes du bol. Lorsque l'entonnoir est désassemblé de l'embase (position désassemblée), le bol et le couvercle isolent avantageusement de l'extérieur le mélange d'ingrédients qui pourrait rester contenu dans l'entonnoir. Avantageusement, le risque de dispersion de ce mélange par maladresse en est limité.

Dans un mode de réalisation préféré, l'arbre d'émulseur est maintenu à l'intérieur du bol par coopération de son extrémité supérieure avec une ouverture ménagée dans le couvercle, comme décrit précédemment, et par coopération de l'extrémité inférieure de l'arbre d'émulseur avec l'orifice de sortie de l'entonnoir. Dans un mode de réalisation, dans la position désassemblée de l'entonnoir, l'arbre d'émulseur obture de manière étanche l'orifice de sortie de l'entonnoir, le maintien dans cette obturation étant, dans un mode de réalisation, obtenu sous le seul effet de la gravité.

De préférence, le couvercle définit des fûts qui, dans une position assemblée de l'entonnoir, sont chacun insérés dans une sortie de logement d'un logement respectif, et en communication de fluide avec l'intérieur d'un conteneur logé dans ledit logement, à travers un clapet de vidage dudit conteneur. Chaque fût autorise ainsi l'introduction dans le bol d'un ingrédient sortant par la sortie de logement correspondante.

Avantageusement, l'ingrédient sortant du conteneur est directement en contact avec l'entonnoir, ce qui assure des conditions d'hygiène optimales. En outre, l'insertion des fûts dans les sorties de logement empêche toute rotation, autour de l'axe de l'entonnoir, du couvercle par rapport à l'embase.

De préférence encore, l'ensemble formé par le bol et le couvercle est fixé de manière amovible sur l'embase, de préférence au moyen d'au moins un aimant, de préférence fixé sur le couvercle, et d'au moins un insert métallique respectif, de préférence fixé sur l'embase.

De préférence, le couvercle comporte plusieurs aimants et l'embase comporte plusieurs inserts métalliques respectifs, les aimants et les inserts étant positionnés pour être fixés les uns aux autres dans une ou plusieurs positions angulaires prédéterminées de l'entonnoir par rapport à l'embase, autour de l'axe de l'entonnoir.

Avantageusement, les aimants et les inserts métalliques facilitent ainsi le positionnement de l'entonnoir lorsqu'il doit être assemblé à l'embase.

De préférence toujours, l'entonnoir, de préférence le bol, comporte un coulisseau, de préférence défini par une excroissance périphérique, et l'embase comportant un rail, s'étendant de préférence parallèlement à l'axe desdits fûts, conformé pour guider, par coopération avec le coulisseau, l'insertion des fûts dans les sorties de logement respectives. Avantageusement, le rail empêche également une rotation du bol par rapport à l'embase dans la position assemblée de l'entonnoir sur l'embase. Seule une traction sur l'entonnoir, parallèlement à l'axe des fûts, à l'encontre de la traction des aimants sur les inserts métalliques, permet ainsi de désassembler l'entonnoir de l'embase. Notamment, aucune rotation de l'entonnoir, et en particulier aucun moment exercé sur le bol autour de l'axe de l'entonnoir, ne permet de désassembler l'entonnoir de l'embase. Le risque de mauvaise manipulation par l'utilisateur en est réduit.

De préférence, les excroissances périphériques servant de coulisseaux définissent également les rainures recevant les oreilles du couvercle.

**Selon un quatrième aspect** de l'invention, l'appareil comporte une carte électronique et, pour chaque logement, une antenne adaptée à la lecture sans contact d'un marqueur d'un conteneur disposé dans ledit logement, ladite antenne étant fixée sur un substrat relié à la carte électronique par une charnière, de préférence un film souple. Avantageusement, la position du substrat par rapport au plan général de la carte électronique peut être ainsi facilement modifiée, ce qui facilite l'assemblage sur l'embase. De préférence, le substrat s'étend dans un plan général formant avec le plan général de la carte électronique un angle supérieur à 45°, 60°, 80° et/ou inférieur à 120°, 110°, 100°, de préférence sensiblement perpendiculairement au plan général de la carte électronique.

Dans le mode de réalisation préféré, la carte électronique s'étend sensiblement perpendiculairement à l'axe de l'arbre d'émulseur et les substrats des antennes s'étendent sensiblement parallèlement à cet axe.

De préférence encore, la carte électronique principale est disposée, de préférence sensiblement horizontalement, dans le volume s'étendant entre les logements, de préférence au-dessus et face au moteur d'entraînement de l'arbre d'émulseur, et, de préférence encore, les substrats des antennes s'étendent sensiblement verticalement, de préférence en appui sur lesdits logements. La disposition sensiblement verticale des antennes améliore considérablement la compacité de l'appareil.

De préférence, les moyens de transfert d'un ingrédient hors d'un conteneur disposé dans un logement comportent une pompe de pressurisation dont la sortie est en communication de fluide avec l'intérieur dudit conteneur.

La mise en marche de la pompe de pressurisation, commandée par le module de commande, permet avantageusement d'augmenter la pression à l'intérieur du conteneur et de pousser l'ingrédient contenu dans ce conteneur par l'orifice de sortie du logement, dans l'entonnoir.

**Selon un cinquième aspect principal,** l'appareil de fabrication comporte une pluralité de conteneurs,
au moins un, de préférence chaque conteneur comportant un récipient contenant un ingrédient de ladite boisson, et une tête fixée, de préférence vissée, de manière amovible, sur ledit récipient,
ledit conteneur étant logé dans un logement respectif du cellier, la tête dudit conteneur comportant un clapet de pressurisation et un clapet de vidage en communication avec une entrée de pressurisation et une sortie de logement du logement, respectivement ;
le récipient et la tête dudit conteneur comportant des surfaces de détrompeur de récipient et de tête, respectivement, configurées pour constituer ensemble, dans une position de fixation de la tête sur le récipient prédéterminée, de préférence dans une position de vissage maximal de la tête sur le récipient, une surface de détrompeur de conteneur apte à coopérer avec une surface de détrompeur de logement pour assurer un positionnement prédéterminé du conteneur par rapport au logement.

Avantageusement, les clapets de de pressurisation et de vidage peuvent être ainsi facilement accouplés à une sortie de la pompe de pressurisation et à une sortie du logement, respectivement. Ils peuvent ensuite autoriser une entrée d'air en provenance de la pompe de pressurisation, à l'intérieur de récipient, et autoriser une sortie de l'ingrédient sous l'effet de cette entrée d'air.

La surface de détrompeur de conteneur est configurée pour, en coopération avec la surface de détrompeur de tête, verrouiller en position la tête sur le récipient.

De préférence, les surfaces de détrompeur de conteneur et de logement s'étendent, de préférence verticalement, l'une contre l'autre, de préférence en contact l'une avec l'autre ou écartées l'une de l'autre d'une distance inférieure à 3 mm, à 2 mm, ou à 1 mm, dans une position insérée du conteneur dans ledit logement.

De préférence, les surfaces de détrompeur de récipient et de tête sont des surfaces alignées, de préférence planes, qui définissent ensemble une surface de détrompeur du conteneur plane.

La surface de détrompeur du logement est également, de préférence, une surface plane, de préférence verticale, contre laquelle chacune desdites surfaces planes du récipient et de la tête s'étend, au moins partiellement, lorsque le conteneur est logé dans le logement (position insérée). Avantageusement, le déplacement du conteneur n'est alors plus possible que parallèlement à la surface de détrompeur du logement. La tête est également avantageusement verrouillée sur le récipient.

Dans un mode de réalisation préféré, la tête présente extérieurement une surface générale cylindrique de section circulaire, localement interrompue par un méplat constituant ladite surface de détrompeur de tête. De préférence, le récipient présente extérieurement une surface générale cylindrique de section circulaire, localement interrompue par un méplat constituant ladite surface de détrompeur de récipient.

De préférence, le conteneur, de préférence le récipient, est pourvu d'un marqueur adapté pour une communication électromagnétique à distance, de préférence un marqueur NFC, fixé sur la tête dudit conteneur. De préférence, le marqueur s'étend sur l'une desdites surfaces de détrompeur du récipient et de la tête.

La tête peut être montée non amovible sur le récipient. En particulier, elle peut être clipsée, de manière inviolable, ce qui est bien adapté lorsque le conteneur est un consommable.

Notamment dans ce mode de réalisation, la tête est de préférence conformée pour être montée sur la tête par coulissement puis, de préférence clipsage, de préférence clipsage irréversible, le coulissement étant de préférence selon une direction sensiblement parallèle à l'axe de la tête.

En particulier, la tête peut être configurée pour, lors de son assemblage sur le récipient, être guidée en coulissement sur le récipient, de préférence jusqu'à une position extrême dans laquelle elle vient se clipser sur le récipient, de préférence de manière définitive. La tête peut comporter un coulisseau, par exemple un pion, configuré pour coopérer avec un rail ménagé sur le récipient. De manière équivalente, le coulisseau peut être sur le récipient et le rail sur le récipient. Le rail, de préférence rectiligne, s'étend de préférence parallèlement à l'axe du récipient ou de la tête, selon qu'il est ménagé sur le récipient ou sur la tête, respectivement.

Avantageusement, un tel montage, par coulissement puis clipsage, est rapide et permet un positionnement prédéterminé de la tête sur le récipient, et en particulier un positionnement angulaire prédéterminé autour de l'axe de la tête.

Dans un mode de réalisation préféré, les surfaces de détrompeur de tête et de récipient sont configurées de manière que le conteneur ne puisse être logé dans un logement respectif, de manière à accoupler le clapet de pressurisation avec l'entrée de pressurisation du logement, d'une part, et le clapet de vidage avec la sortie de logement du logement, que lorsque lesdites surfaces de détrompeur sont disposées dans une position prédéfinie.

Chaque logement est, de préférence, de forme sensiblement complémentaire à la partie du conteneur qui y est logée.

De préférence encore, la tête comporte une paroi latérale, de forme générale cylindrique, pourvue d'un filet intérieur de fixation à un filet extérieur d'un goulot du récipient.

Bien entendu, les caractéristiques, éventuellement optionnelles, des différents modes de réalisation principaux peuvent être combinées.

### Définitions

Un "clapet" est parfois encore appelé "valve anti-retour". Sauf indication contraire, les clapets d'un appareil selon l'invention sont de préférence de type « à incision transversale » (« cross-slit » en anglais), de préférence de type « valve parapluie » (« umbrella » en anglais).

Les positions "amont" et "aval" sont définies par rapport à l'écoulement de l'ingrédient.

L'appareil selon l'invention est décrit en référence à une position de service dans laquelle l'appareil est disposé sur un sol horizontal et prêt à fabriquer une boisson, les conteneurs étant disposés dans leurs logements respectifs. Les adjectifs "supérieur" et "inférieur", « vertical » et « horizontal » ou les adverbes « au-dessus » et « en-dessous » font référence à cette position.

### Brève description des figures

D'autres caractéristiques et avantages de l'invention apparaîtront encore à la lecture de la description détaillée qui va suivre, et à l'examen du dessin annexé, dans lequel:
- la figure 1 (la et 1b) représente en perspective un appareil selon l'invention, l'entonnoir sur la figure 1b étant représenté désassemblé de l'embase ;
- la figure 2 (2a et 2b) représente des coupes transversales de cet appareil ;
- la figure 2c représente en perspective le bol de l'entonnoir et un arbre d'émulseur dans la position fermée ;
- la figure 2d représente en coupe longitudinale l'entonnoir et l'arbre d'émulseur dans la position fermée ;
- la figure 3 (3a-3c) illustre l'assemblage du module de commande de l'appareil représenté sur la figure 1 ;
- la figure 4a représente, en perspective, le moteur d'entraînement de l'arbre d'émulseur et l'actionneur permettant de modifier sa position suivant la direction verticale ;
- la figure 4b représente une vue éclatée de l'arbre d'émulseur ;
- la figure 4c représente une coupe de l'appareil, illustrant la position fermée.

### Description détaillée

### Généralités

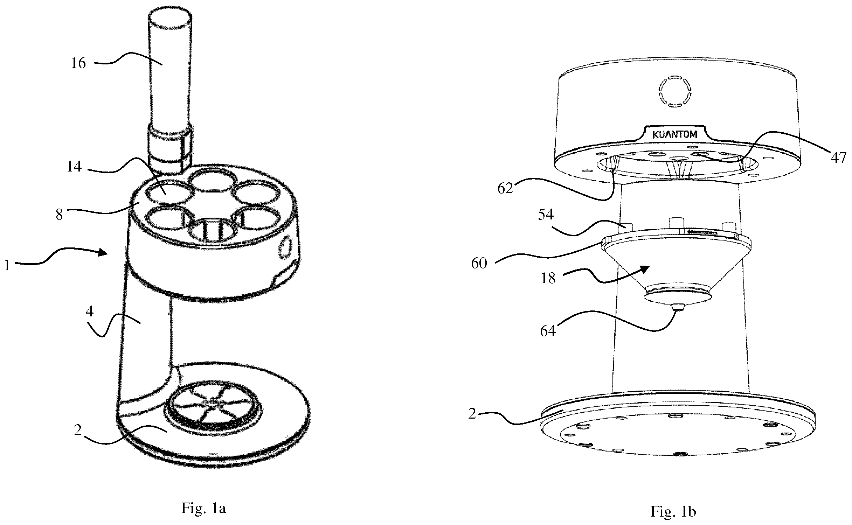

La figure 1 représente un appareil de fabrication d'une boisson à l'unité, c'est-à-dire au verre, selon l'invention.

L'appareil comporte une embase 1 comportant une plateforme 2 de réception d'un verre à remplir, un mât 4 fixé sur la plateforme 2 et un cellier 8, fixé sur le mât 4 au-dessus de la plateforme 2 et présentant une pluralité de logements 14. Chaque logement 14 est adapté pour recevoir un conteneur 16 contenant un ingrédient.

De préférence, l'appareil comporte plus de trois, plus de quatre, plus de cinq, voire plus de six ou plus de sept, et/ou moins de vingt, moins de quinze, voire moins de dix logements, de préférence moins de huit logements, de préférence six logements.

Un entonnoir 18 est fixé de manière amovible sur le cellier 8 et reçoit les ingrédients sortant des conteneurs.

L'embase supporte également un module de commande 20 et des pompes 22 destinées à la pressurisation des conteneurs.

### Conteneurs

Tous les conteneurs sont de préférence identiques. Ils peuvent contenir des ingrédients identiques ou différents. De préférence, au moins deux conteneurs contiennent des ingrédients différents.

Les conteneurs 16 sont amovibles, c'est-à-dire qu'ils peuvent être extraits des logements, puis replacés dans les logements, dans la position de service, aussi souvent que souhaité.

Chaque logement 14 est de préférence de forme sensiblement complémentaire à la partie du conteneur qui y est logée, de manière à pouvoir recevoir et immobiliser en position ledit conteneur.

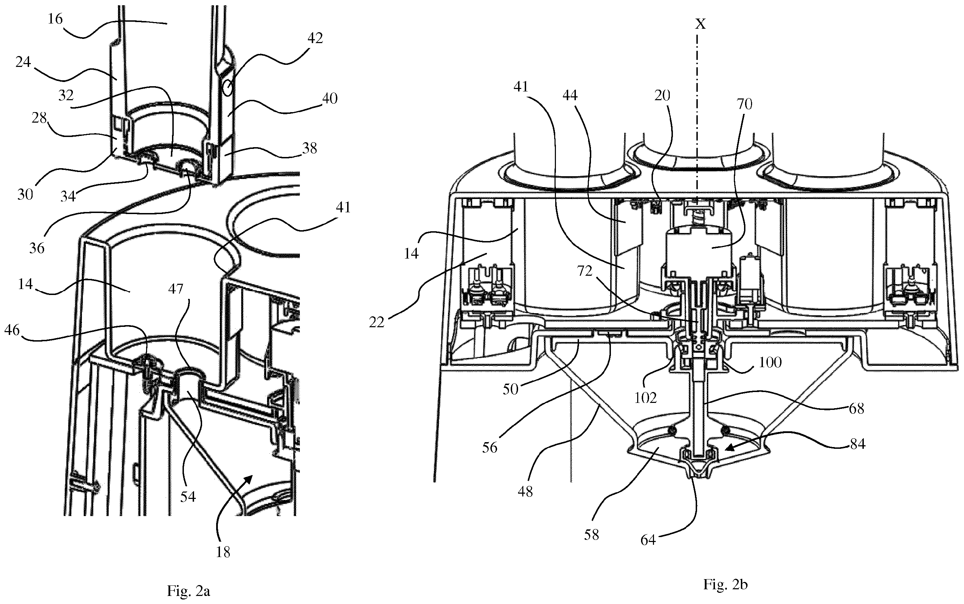

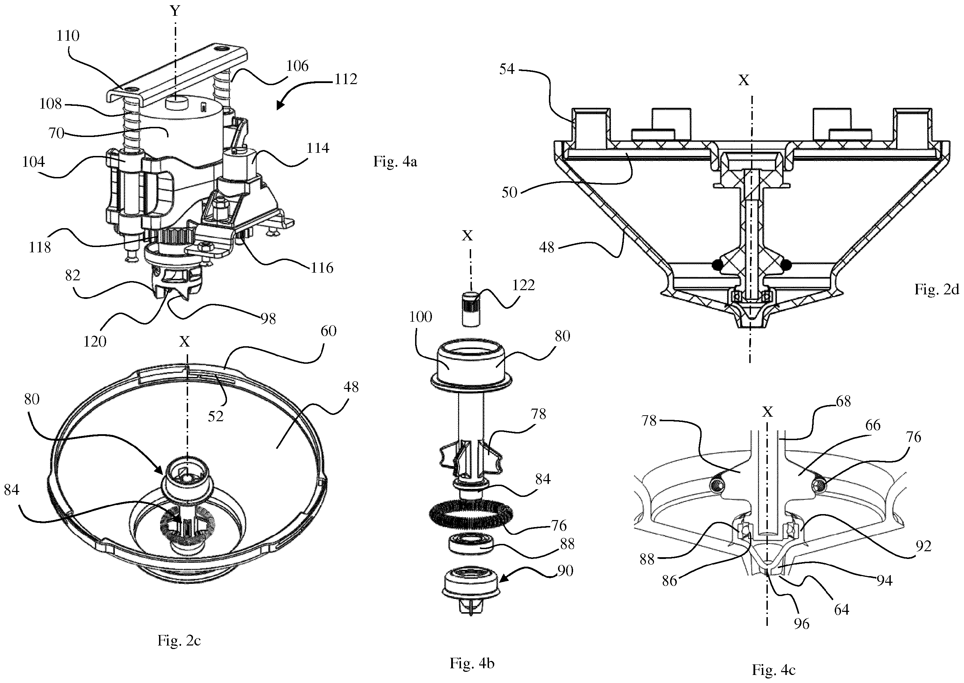

Chaque conteneur 16 comporte un récipient 24, de préférence en verre, définissant un volume dans lequel est disposé un ingrédient, et une tête 28, fixée, de préférence vissée, sur le récipient 24 (fig. 2a).

Un récipient 24 présente de préférence un volume intérieur supérieur à 0,1 litre, de préférence supérieur à 0,2 litre, et/ou inférieur à 1,5 litre, de préférence inférieur à 1 litre, de préférence d'environ 0,5 litre.

La paroi d'un récipient 24 peut être en tout matériau "alimentaire" adapté à l'ingrédient contenu dans le récipient. Son épaisseur est de préférence supérieure à 1 mm, 2 mm ou 3 mm.

La tête 28 comporte une paroi latérale 30, de forme générale cylindrique, pourvue d'un filet intérieur de fixation à un filet extérieur d'un goulot du récipient, et un fond 32 traversé par des clapets de pressurisation 34 et de vidage 36, fixés sur le fond 32, par exemple, par collage ou clipsage.

Les filets de fixation sont de préférence configurés pour assurer un vissage maximal en moins d'un tour, de préférence moins d'un demi-tour. De préférence, dans la position de vissage maximal, un méplat 38 de la tête, défini par la surface extérieure de la paroi latérale 30, s'étend dans le prolongement d'un méplat 40 défini par la surface extérieure du récipient 24.

Les méplats 38 et 40 sont des surfaces de détrompeur de tête et de récipient qui doivent être disposés dans une position prédéfinie pour que le conteneur puisse être logé dans son logement. Dans cette position prédéfinie, ces méplats forment une surface de détrompeur de conteneur et assurent, en coopération avec un méplat 41 du logement, formant une surface de détrompeur de logement, un moyen pour détromper l'utilisateur lorsqu'il insère le conteneur dans son logement.

Avantageusement, les surfaces de détrompeur de tête et de récipient coopèrent ensemble et avec la surface de détrompeur de logement pour assurer à l'utilisateur que la tête est fixée sur le récipient dans une position de fixation prédéterminée et que le conteneur est logé dans le logement avec un positionnement prédéterminé. Cette coopération est particulièrement avantageuse lorsque le conteneur est de forme cylindrique.

La position de fixation prédéterminée peut correspondre à une position de fixation étanche, de préférence de vissage maximal, de la tête sur le récipient. Dans ce cas, la coopération entre les différentes surfaces de détrompeur permet d'assurer à l'utilisateur que la fixation de la tête sur le récipient est étanche. Ainsi, le risque de fuite de l'ingrédient contenu dans le récipient est grandement limité.

Cette coopération empêche également tout dévissage de la tête après que le conteneur a été disposé dans son logement.

Chaque conteneur 16 porte encore un marqueur 42, ou « tag », de préférence de type NFC. Le marqueur 42 est de préférence fixé sur le méplat 40 du récipient ou sur le méplat 38 de la tête. De préférence, il s'étend verticalement lorsque le conteneur est disposé dans son logement.

Le marqueur 42 contient de préférence des informations sur l'ingrédient contenu dans le conteneur, par exemple sur sa composition, son volume, sa masse volumique, son origine, le nombre de calories qu'il apporte ou sa date de péremption.

L'appareil comporte un lecteur pourvu d'une antenne 44, disposée de manière à lire, sans contact, de préférence par NFC (en anglais « near field communication »), le marqueur 42.

De préférence, le lecteur est également capable d'écrire sur le marqueur 42. De préférence, il est capable d'écrire sur le marqueur 42 des informations relatives à l'utilisation du conteneur 16, par exemple relatives à la quantité d'ingrédient déjà extraite du conteneur, ou à la date de première utilisation du conteneur.

Le lecteur est de préférence en communication avec le module de commande 20. Avantageusement, le module de commande 20 peut informer l'utilisateur de la nécessité de changer un conteneur ou de prévoir le remplacement prochain du conteneur, mais aussi de l'informer de la péremption de l'ingrédient contenu dans le conteneur.

L'enregistrement d'informations sur le marqueur 42 par le lecteur permet également, avantageusement, de conserver une traçabilité de ces informations, même si le conteneur est extrait de son logement, par exemple pour être utilisé sur un autre appareil. Les risques sanitaires en sont considérablement réduits et la qualité de l'information fournie aux utilisateurs en est améliorée.

Enfin, le marqueur permet avantageusement au module de commande 20 de connaître le contenu et le logement occupé par le conteneur, sans que l'utilisateur de l'appareil ait besoin de le configurer à cet effet.

### Circuit de remplissage de l'entonnoir

Le circuit permettant le remplissage de l'entonnoir avec un ingrédient contenu initialement dans un conteneur est similaire quel que soit le conteneur considéré. Dans la suite de la description, un seul de ces circuits est donc décrit.

Chaque logement 14 comporte une entrée de pressurisation 46 connectée, par une conduite non représentée, à la sortie d'une pompe de pressurisation 22 respective.

Chaque logement 14 comporte également une sortie de logement 47 par laquelle l'ingrédient extrait du conteneur 16 entre dans l'entonnoir 18.

La pompe de pressurisation 22 est configurée pour mettre en surpression, par l'intermédiaire de l'entrée de pressurisation 46 du logement et du clapet de pressurisation 34 de la tête, l'intérieur de chaque conteneur 16.

L'entonnoir est amovible de manière à pouvoir être nettoyé.

L'entonnoir 18 comporte un bol 48 dans lequel les ingrédients sortant des sorties de logement 47 des logements sont déversés, par surpression dans les récipients 24, et un couvercle 50 (figure 2b).

De préférence, le couvercle 50, de préférence discoïdal, comporte des oreilles périphériques, non représentées, qui viennent se loger dans des rainures 52 correspondantes du bol 48 (figure 2c). Une fois l'entonnoir 18 désolidarisé de l'embase, le couvercle 50 peut être ainsi facilement désassemblé du bol 48.

Le couvercle 50 comporte des fûts 54 qui, dans la position assemblée de l'entonnoir sur l'embase, sont insérés dans des sorties du logement 47 respectives (figure 2a) de manière à mettre en communication de fluide étanche l'intérieur du bol 48 et l'intérieur du récipient 24, par l'intermédiaire du clapet de vidage 36.

L'insertion des fûts 54 dans les sorties de logement 47 empêche toute rotation du couvercle 50 autour de son axe.

Le couvercle 50 comporte des aimants 56 coopérant avec des inserts métalliques de l'embase, non représentés. Cette coopération maintient l'entonnoir 18 plaqué contre l'embase dans la position assemblée.

Le bol 48 comporte une paroi latérale sensiblement conique, d'axe vertical, et un fond 58.

Le bol 48 comporte par ailleurs des coulisseaux, sous la forme d'excroissances périphériques 60, qui, dans la position assemblée de l'entonnoir, sont logés dans des rails 62 respectifs, de préférence sensiblement verticaux, ménagés dans l'embase, ce qui empêche la rotation du bol 48 autour de l'axe X. Une désolidarisation de l'entonnoir 18 de l'embase n'est donc pas possible par rotation autour de l'axe X.

Le nombre et le positionnement des aimants 56 et des inserts métalliques sont de préférence déterminés de manière que, lors de l'assemblage de l'entonnoir sur l'embase, sous l'effet de l'attraction magnétique, l'entonnoir adopte une position angulaire autour de l'axe X dans laquelle les excroissances périphériques 60 du bol 48 sont en regard des rails 62 correspondants. L'assemblage de l'entonnoir 18 sur l'embase en est facilité.

Dans un mode de réalisation préféré, le bol 48 est disposé immédiatement sous les sorties de logement 47. De préférence, chaque sortie de logement 47 débouche, vers l'aval, directement dans l'entonnoir, de sorte qu'un ingrédient sortant par le clapet de vidage 36 d'un conteneur tombe directement dans le bol 48, sans transiter par un conduit comme un tuyau souple ou rigide. Les conditions d'hygiène sont alors optimales.

Le fond 58 de l'entonnoir 18 est traversé par un orifice de sortie 64 sélectivement obturable au moyen d'un obturateur décrit ci-après, dont le déplacement est commandé par le module de commande 20.

L'orifice de sortie 64 débouche au-dessus de la plate-forme 2 de réception d'un verre à remplir. L'orifice de sortie 64 autorise ainsi un écoulement par gravité du mélange contenu dans l'entonnoir, vers le verre.

### Emulseur

L'appareil comporte encore un émulseur 66 permettant de créer une émulsion à partir du mélange d'ingrédients contenu dans le bol 48.

L'émulseur comporte un arbre d'émulseur 68, d'axe X, et un moteur d'entraînement 70 comportant un arbre d'entraînement 72 couplé en rotation avec l'arbre d'émulseur 68 autour de l'axe X.

L'arbre d'émulseur 68 est pourvu d'un organe d'émulsion qui peut être, comme dans le mode de réalisation représenté, constitué d'un ressort hélicoïdal 76 fermé sur lui-même et ceinturant l'arbre d'émulseur 68 en prenant appui sur des palettes 78 s'étendant sensiblement radialement par rapport à l'axe X et de préférence équi-angulairement réparties autour de l'axe X.

Dans le mode de réalisation représenté, l'arbre d'émulseur 68 comporte une extrémité supérieure 80 couplée en rotation avec l'arbre d'entraînement 72, par l'intermédiaire d'un crabot 82, et une extrémité inférieure 84 sur laquelle est fixée la bague intérieure 86 d'un roulement, de préférence d'un roulement à billes.

Dans le mode de réalisation préféré représenté, l'arbre d'émulseur 68 est monté mobile en translation selon l'axe X entre des positions ouverte et fermée, de manière à venir sélectivement boucher l'orifice de sortie 64 au fond du bol 48, et ainsi faire office d'obturateur. La bague extérieure 88 du roulement à billes constitue dans la position fermée un palier guidant la rotation de l'arbre d'entraînement 68 autour de l'axe X.

De préférence, un bouchon d'obturation 90, de préférence en un élastomère, est fixé à la bague extérieure 88 et conformé de manière à obturer de manière étanche l'orifice de sortie 64 du bol dans la position fermée, comme représenté sur la figure 4c.

Le bouchon d'obturation 90 porte de préférence une jupe souple 92 dans laquelle est logée la bague extérieure 88. Les dimensions de la jupe 92 sont déterminées de manière qu'elle comprime élastiquement la bague extérieure 88, afin d'en être solidaire rigidement.

Le bouchon d'obturation 90 comporte également un téton 94 prolongeant vers le bas la jupe 92 et conformé de manière à pénétrer dans l'orifice de sortie 64 du bol 48, ce qui permet de maintenir efficacement en position l'arbre d'émulseur par rapport au bol 48 lorsque l'entonnoir est désassemblé de l'embase.

De préférence encore, le téton 94 comporte des ailettes 96, s'étendant de préférence sensiblement radialement par rapport à l'axe X et de préférence réparties sensiblement équi-angulairement autour de l'axe X.

Le nombre d'ailettes 96 est de préférence supérieur à 2, de préférence supérieur à 3 et de préférence inférieur à 8, de préférence inférieur à 6. La présence d'ailettes 96 facilite l'insertion du téton 94 dans l'orifice de sortie 64 du bol 48. Par ailleurs, dans la position ouverte, les ailettes 96 guident avantageusement l'écoulement du mélange d'ingrédients contenu dans le bol 48, en évitant l'apparition de tourbillons.

Pour craboter l'extrémité inférieure de l'arbre d'entrainement et l'extrémité supérieure 80 de l'arbre d'émulseur 68, ces extrémités comportent des dents respectives engrénées les unes dans les autres. Lorsque l'entonnoir 18 est désassemblé du plateau, par translation vers le bas, selon l'axe X, l'engrènement est supprimé sans que l'opérateur ait aucune opération spécifique à effectuer.

De préférence, les dents de l'extrémité inférieure de l'arbre d'entraînement et/ou les dents de l'extrémité supérieure de l'arbre d'émulseur présentent chacune une face inclinée 98 facilitant l'accouplement quelle que soit la position angulaire initiale de l'arbre d'entrainement ou de l'arbre d'émulseur.

Dans un mode de réalisation préféré, l'extrémité supérieure 80 de l'arbre d'émulseur 68 comporte une jupe supérieure 100 rigide qui, lorsque le couvercle 50 ferme le bol 48 (figure 2b), est logée dans une ouverture 102, de forme complémentaire, ménagée au centre du couvercle. Lorsque l'entonnoir est désassemblé de l'embase, l'arbre d'émulseur 68 reste avantageusement maintenu en position, suivant l'axe de l'entonnoir, ce qui permet de le maintenir dans la position fermée, au moins tant que l'entonnoir n'est pas retourné. Avantageusement, si l'entonnoir contient encore du liquide, ce liquide n'est donc pas renversé lors de la manipulation de l'entonnoir.

Pour que l'arbre d'émulseur 68 puisse transiter entre la position fermée dans laquelle il obture, de manière étanche, l'orifice de sortie 64 et la position ouverte dans laquelle il est dégagé de cet orifice de sortie et autorise l'écoulement du mélange contenu dans le bol 48, l'arbre d'émulseur 68 est mobile en translation, selon l'axe X. A cet effet, le moteur d'entraînement 70 est fixé dans un support 104 monté coulissant sur deux tiges 106 verticales. Un ressort hélicoïdal 108 est enfilé sur chaque tige 106 et comprimé entre le support 104 et une butée 110 à l'extrémité supérieure de la tige 106, de manière à pousser élastiquement le support 104 vers le bas.

L'entraînement en translation du support 104 vers le haut est assuré au moyen d'un actionneur 112. L'actionneur 112 comporte un moteur d'actionneur 114, une première roue dentée 116 fixée sur l'arbre du moteur d'actionneur, et une deuxième roue dentée 118, entraînée par la première roue dentée 116 autour de l'axe de rotation Y de l'arbre du moteur d'entraînement 70, confondu avec l'axe X.

La deuxième roue dentée 118 comporte un suiveur de came qui prend appui sur une surface de came inclinée du support 104 de sorte que sa rotation modifie l'altitude du moteur d'entrainement 70. Bien entendu, l'invention n'est pas limitée à ces moyens pour modifier l'altitude du moteur d'entrainement 70.

Par ailleurs, l'extrémité supérieure de l'arbre d'émulseur 68 est fixée à l'extrémité inférieure de l'arbre d'entraînement par des moyens de fixation magnétiques. Le déplacement vertical du moteur d'entraînement entraine donc celui de l'arbre d'émulseur 68, et ainsi provoque l'ouverture ou la fermeture de l'orifice de sortie 64.

En particulier, les moyens de fixation magnétiques peuvent comporter un aimant 120 fixé sur l'extrémité inférieure de l'arbre d'entraînement coopérant avec un aimant 122 fixé sur l'extrémité supérieure de la tige d'émulseur 68.

### Module de commande

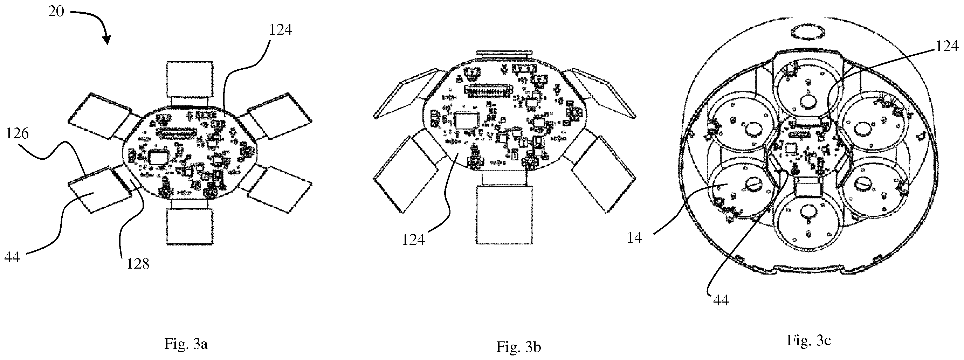

Le module de commande 20 comporte classiquement une carte électronique 124 (figure 3) sur laquelle sont notamment fixés un processeur et une mémoire comportant des instructions de code permettant de faire fonctionner le processeur, en particulier pour commander les organes électriques, et notamment les moteurs assurant le fonctionnement des pompes de pressurisation et les moteurs d'entraînement et d'émulseur.

Chaque antenne 44, portée par un substrat 126, est connectée électriquement à la carte électronique 124 par l'intermédiaire de pistes conductrices disposées sur une charnière 128 flexible, de préférence en un film polymérique. Comme représenté sur les figures 3a et 3b, les antennes 44 peuvent être ainsi écartées du plan général de la carte électronique 124, et en particulier s'étendre sensiblement perpendiculairement à la carte électronique 124.

Comme représenté sur la figure 3c, la carte électronique 124 est de préférence disposée entre les logements 14, de préférence sensiblement perpendiculairement à l'axe X, chaque substrat 126 s'étendant en appui sur un logement 14 (voir également figure 2b). La compacité de l'appareil en est améliorée.

Dans le mode de réalisation préféré, le substrat d'une antenne 44 associée à un logement s'étend contre le méplat 41 de ce logement 14.

### Fonctionnement

Dans le mode de réalisation préféré, l'appareil fonctionne de la manière suivante.

Initialement, l'entonnoir est en position désassemblée, comme représenté sur la figure 1b. L'arbre d'émulseur repose, par son extrémité inférieure, dans l'orifice de sortie de l'entonnoir et son extrémité supérieure traverse l'ouverture centrale du couvercle, ce qui maintient l'arbre d'émulseur selon l'axe de l'entonnoir.

Le couvercle est fixé sur le bol par une rotation autour de son axe, les oreilles à la périphérie du couvercle étant insérées dans les rainures 52 du bol.

L'utilisateur approche l'entonnoir de l'embase afin d'introduire les fûts 54 du couvercle dans les sorties de logement correspondantes. Lorsque les fûts sont à proximité des sorties de logement, les aimants fixés sur le couvercle sont attirés par les inserts métalliques de l'embase, ce qui permet de positionner précisément les fûts 54 en regard des sorties de logement 47, sans opération spécifique de l'utilisateur. Dans cette position, les excroissances 60 à la périphérie du bol 48 sont en regard des rails 62. Après pénétration des excroissances périphériques 60 dans les rails 62, l'entonnoir est guidé en translation selon son axe jusqu'à la position assemblée dans laquelle le couvercle est maintenu en appui contre l'embase par la coopération des aimants du couvercle et des inserts métalliques de l'embase.

Les rails 62 et les sorties de logement 47, en coopération avec les excroissances 60 et les fûts 54, respectivement, interdisent toute rotation de l'entonnoir.

Pour utiliser l'appareil, l'utilisateur doit également introduire les conteneurs 16, par leurs têtes, dans les logements 14, comme représenté sur la figure la.

Les conteneurs peuvent être livrés prêts-à-l'emploi, la tête d'un conteneur étant déjà montée sur le récipient. De préférence, un opercule, de préférence étanche, recouvre les clapets de pressurisation et de vidage. L'hygiène en est améliorée.

Préalablement, il serre la tête du conteneur sur le récipient 24, ce qui permet d'aligner les méplats 38 et 40 de la tête et du récipient. Ces méplats servent alors de détrompeur, en définissant une position unique permettant l'introduction du conteneur dans son logement.

L'introduction du conteneur dans son logement permet d'accoupler son clapet de pressurisation 34 avec l'entrée de pressurisation 46 du logement, d'une part, et le clapet de vidage 36 avec la sortie de logement 47.

L'accouplement d'un conteneur dans un logement conduit ainsi à établir un circuit étanche depuis le récipient 24, à travers le clapet de vidage 36 et l'orifice de sortie jusqu'au bol 48 de l'entonnoir.

Le marqueur 42 fixé sur le méplat 40 du récipient est alors à proximité de l'antenne 44, dans une position autorisant des échanges avec l'antenne 44. Ces échanges permettent au module de commande 20 de savoir que le conteneur est présent dans le logement, mais aussi, par exemple, de connaître la nature de l'ingrédient, la quantité d'ingrédient résiduelle, ainsi que la date de mise en service.

La connaissance de la nature de l'ingrédient et de la quantité résiduelle d'ingrédient dans le récipient permet avantageusement au conteneur d'être placé dans n'importe quel logement. Avant de commencer la fabrication d'une boisson, il suffit en effet au lecteur de lire le marqueur pour connaître les ingrédients dont il dispose, ainsi que leurs emplacements et leurs quantités.

Lorsqu'un conteneur est introduit dans son logement, les deux méplats 38 et 40 font face et, de préférence sont en contact, avec le méplat 41 du logement. Ni le récipient 24, ni la tête du conteneur ne peuvent alors tourner, ce qui empêche notamment tout dévissage accidentel de la tête.

Lorsqu'un utilisateur demande la fabrication d'une boisson, le module de commande ordonne la fermeture de l'orifice de sortie de l'entonnoir. Plus précisément, il commande de faire descendre, sous l'effet des ressorts 108, le support du moteur d'entraînement, et donc l'arbre d'émulseur, jusqu'à la position fermée.

Pour transférer un ingrédient depuis son conteneur 16 jusqu'à l'entonnoir, le module de commande 20 active ensuite la pompe de pressurisation 22 du logement associé, ce qui permet l'injection d'air sous pression, par l'intermédiaire du clapet de pressurisation 34, dans le récipient 24. La pression à l'intérieur du récipient 24 augmente en conséquence. Au-delà d'un seuil, sous l'effet de cette surpression, le clapet de vidage 36 s'ouvre et l'ingrédient peut s'écouler, par le clapet de vidage 36 et la sortie du logement, dans l'entonnoir.

Les différents ingrédients peuvent être versés dans l'entonnoir simultanément ou non. De préférence, ils sont versés sensiblement simultanément, ce qui accélère la fabrication de la boisson.

La nature des ingrédients et leur dosage sont déterminés au moyen d'une recette mémorisée dans le module de commande 20. Notamment pour fabriquer un cocktail, au moins deux ingrédients différents sont versés dans l'entonnoir. La quantité versée d'un ingrédient peut être notamment ajustée avec la durée de la mise sous pression du récipient correspondant et/ou avec la valeur de la pression imposée dans le récipient.

Après dosage d'une quantité déterminée d'ingrédient, en fonction de la recette, le module de commande désactive la pompe de pressurisation. Le clapet de vidage se ferme.

Le module de commande active l'émulseur.

Dans la position fermée, le bouchon d'obturation est plaqué contre l'orifice de sortie de l'entonnoir, et ainsi immobilisé. L'arbre d'émulseur est donc maintenu latéralement par la bague extérieure du roulement, bloquée en position par le bouchon d'obturation.

Une fois que le mélange est émulsionné, le module de commande 20 commande l'ouverture de l'orifice de sortie. Plus précisément, il commande l'activation du moteur d'actionneur afin de faire remonter, à l'encontre des ressorts 108, le support du moteur d'entraînement, et donc, du fait du couplage magnétique entre l'arbre d'entraînement et l'arbre d'émulseur, faire remonter le bouchon d'obturation.

Le mélange contenu dans l'entonnoir s'écoule dans le verre. Les ailettes 96 guident l'écoulement.

La dose d'un ingrédient extrait d'un conteneur est enregistrée, par le lecteur 44, dans le marqueur 42 du conteneur. A la lecture des informations contenues dans le marqueur, le lecteur peut donc déterminer la quantité d'ingrédient résiduelle, et, le cas échéant, avertir l'utilisateur.

Pour nettoyer l'appareil, l'utilisateur tire sur l'entonnoir, suivant l'axe X, à l'encontre de l'attraction magnétique entre le couvercle et l'embase d'une part et entre l'arbre d'émulseur 68 et l'arbre d'entraînement d'autre part. L'ensemble constitué du bol 48, du couvercle 50 et de l'arbre d'émulseur 68 se détache alors de l'embase. L'arbre d'émulseur 68 reste cependant aligné avec l'axe de l'entonnoir, étant maintenu, en partie supérieure, par l'ouverture centrale 102 du couvercle, et, en partie inférieure, par l'introduction du téton du bouchon d'obturation dans l'orifice de sortie de l'entonnoir. La manipulation de cet ensemble en est facilitée.

Après démontage du couvercle, l'arbre d'émulseur 68 peut être retiré et le bol. Le couvercle et l'arbre d'émulseur peuvent être ainsi nettoyés séparément.

De manière remarquable, les fûts 54 s'étendent, dans la position assemblée de l'entonnoir, jusqu'aux sorties de logement 47, jusqu'à être en contact étanche avec les clapets de vidage 36 respectifs. Le seul nettoyage de l'entonnoir suffit ainsi à maintenir des conditions d'hygiène optimales.

Comme cela apparaît clairement à présent, un appareil selon l'invention est compact et robuste. Il permet de fabriquer très rapidement et de manière précise une boisson, et en particulier un cocktail. En outre, les conteneurs peuvent être facilement remplacés, ce qui offre une grande souplesse d'utilisation.

Un appareil selon l'invention permet également une hygiène optimale, notamment parce que les circuits pour les ingrédients sont extrêmement courts, un ingrédient pouvant être transféré directement d'un conteneur vers l'entonnoir, puis directement de l'entonnoir vers le verre, sans transiter par des tuyaux.

De préférence, un appareil selon l'invention ne comporte aucun conduit, et en particulier aucun tuyau, souple ou rigide, entre un conteneur quelconque et l'entonnoir.

En particulier, les surfaces de détrompeur ne sont pas limitées à des méplats. Toutes les surfaces permettant de maintenir un conteneur dans une position relative par rapport au logement dans lequel il est inséré sont envisageables.

## Revendications

1. Appareil de fabrication d'une boisson à l'unité, ledit appareil comportant :
- une embase (1) comportant un cellier (8) définissant une pluralité de logements (14), chaque logement étant configuré pour recevoir un conteneur (16) amovible respectif contenant un ingrédient de ladite boisson, et étant pourvu d'une sortie de logement (47) ;
- un entonnoir (18) monté amovible sur l'embase, sous les sorties de logement, et comportant un orifice de sortie (64) ;
- des moyens de transfert (22) dans l'entonnoir, à travers les sorties de logement desdits logements, des ingrédients contenus dans les conteneurs logés dans lesdits logements ;
- un obturateur mobile entre une position fermée et une position ouverte dans lesquelles il obture de manière étanche et laisse au moins partiellement dégagé l'orifice de sortie de l'entonnoir, respectivement ;
- un actionneur mécaniquement couplé à l'obturateur pour le déplacer entre lesdites positions ouverte et fermée ;
- un émulseur (66) comportant un arbre d'émulseur (68) d'axe X comportant une extrémité inférieure (84) disposée à l'intérieur de l'entonnoir et une extrémité supérieure (80) ;
- un moteur d'entraînement (70) de l'arbre d'émulseur en rotation autour de l'axe X, comportant un arbre d'entraînement (72) mécaniquement couplé à l'extrémité supérieure de l'arbre d'émulseur ;
- un module de commande (20) apte à commander, en fonction d'une composition souhaitée pour ladite boisson, le moteur d'entrainement, les moyens de transfert, et l'actionneur ;
l'arbre d'émulseur étant monté mobile en translation suivant son axe de manière à constituer l'obturateur.

2. Appareil selon la revendication précédente, dans lequel l'arbre d'émulseur porte un palier (86) d'axe X dans lequel, dans la position fermée uniquement, l'extrémité inférieure de l'arbre d'émulseur est guidée en rotation.

3. Appareil selon l'une quelconque des revendications précédentes, dans lequel l'extrémité inférieure de l'arbre d'émulseur porte un bouchon d'obturation (90) conformé pour, dans la position fermée, pénétrer dans l'orifice de sortie de l'entonnoir sur une profondeur supérieure à 1 mm.

4. Appareil selon l'une quelconque des revendications précédentes, dans lequel l'extrémité inférieure de l'arbre d'émulseur porte des ailettes (96) conformées pour limiter, dans la position ouverte, la formation de tourbillons lors de l'écoulement, à travers l'orifice de sortie de l'entonnoir, d'un mélange d'ingrédients contenu dans l'entonnoir.

5. Appareil selon la revendication 3, la revendication 2 s'appliquant, comportant un roulement dont la bague extérieure est maintenue par une jupe du bouchon d'obturation, le frottement du bouchon d'obturation sur l'entonnoir et le frottement de la jupe sur la bague extérieure étant adaptés pour, dans la position fermée, immobiliser la bague extérieure par rapport à l'entonnoir.

6. Appareil selon l'une quelconque des revendications précédentes, dans lequel l'arbre d'émulseur est couplé en translation, suivant l'axe de l'arbre d'émulseur, avec l'arbre d'entraînement au moyen d'une attache désactivable par une traction sur l'arbre d'émulseur suivant son axe.

7. Appareil selon l'une quelconque des revendications précédentes, dans lequel l'entonnoir comporte un bol (48) et un couvercle (50) d'obturation du bol, fixé de manière amovible sur le bol et traversé par une ouverture (102), l'extrémité supérieure de l'arbre d'émulseur étant logée, au moins partiellement, dans l'ouverture quelle que soit la position de l'arbre d'émulseur entre la position fermée et la position ouverte, l'ouverture présentant une forme sensiblement complémentaire à ladite extrémité supérieure.

8. Appareil selon la revendication immédiatement précédente, dans lequel le couvercle définit des fûts (54), qui, dans une position assemblée de l'entonnoir, sont chacun insérés dans une sortie de logement d'un logement respectif, et en communication de fluide avec l'intérieur d'un conteneur logé dans ledit logement, à travers un clapet de vidage dudit conteneur.

9. Appareil selon la revendication immédiatement précédente, dans lequel le bol comporte un coulisseau et l'embase comporte un rail, s'étendant parallèlement à l'axe desdits fûts, conformé pour guider, par coopération avec le coulisseau, l'insertion des fûts dans les sorties de logement respectives.

10. Appareil selon l'une quelconque des revendications précédentes, comportant une carte électronique et, pour chaque logement, une antenne (44) adaptée à la lecture sans contact d'un marqueur (42) d'un conteneur disposé dans ledit logement, ladite antenne étant fixée sur un substrat (126) relié à la carte électronique par une charnière (128).

11. Appareil selon l'une quelconque des revendications précédentes, dans lequel les moyens de transfert d'un ingrédient hors d'un conteneur disposé dans un logement comportent une pompe de pressurisation dont la sortie est en communication de fluide avec l'intérieur dudit conteneur.

## Patentansprüche

1. Vorrichtung zur Bereitung eines Einzelgetränks, die Vorrichtung aufweisend:
- einen Sockel (1), der einen Vorratsraum (8) aufweist, der eine Mehrzahl von Aufnahmen (14) definiert, wobei jede Aufnahme dazu ausgebildet ist, einen jeweiligen herausnehmbaren Behälter (16) aufzunehmen, der eine Zutat des Getränks enthält, und mit einem Aufnahmeausgang (47) versehen ist;
- einen Trichter (18), der abnehmbar auf dem Sockel unter den Aufnahmeausgängen angebracht ist und eine Ausgangsöffnung (64) aufweist;
- Mittel zum Übertragen (22) der Zutaten, die in den Behältern enthalten sind, die in den Aufnahmen untergebracht sind, in den Trichter durch die Aufnahmeausgänge der Aufnahmen;
- einen Verschluss, der zwischen einer geschlossenen Position und einer offenen Position bewegbar ist, in welchen er die Ausgangsöffnung des Trichters dicht verschließt beziehungsweise wenigstens teilweise freilässt;
- einen Betätiger, der mechanisch mit dem Verschluss gekoppelt ist, um ihn zwischen der offenen und der geschlossenen Position zu bewegen;
- eine Emulgiervorrichtung (66), die eine Emulgiervorrichtungswelle (68) mit einer X-Achse aufweist, die ein unteres Ende (84), das innerhalb des Trichters angeordnet ist, und ein oberes Ende (80) aufweist;
- einen Motor zum Drehantrieb (70) der Emulgiervorrichtungswelle um die X-Achse, der eine Antriebswelle (72) aufweist, die mechanisch mit dem oberen Ende der Emulgiervorrichtungswelle gekoppelt ist;
- ein Steuerungsmodul (20), das geeignet ist, den Antriebsmotor, die Übertragungsmittel und den Betätiger je nach einer gewünschten Zusammensetzung für das Getränk zu steuern;
wobei die Emulgiervorrichtungswelle entsprechend ihrer Achse translatorisch beweglich gelagert ist, um den Verschluss zu bilden.

2. Vorrichtung nach dem vorhergehenden Anspruch, wobei die Emulgiervorrichtungswelle ein Lager (86) mit einer X-Achse trägt, wobei nur in der geschlossenen Position das untere Ende der Emulgiervorrichtungswelle in der Drehbewegung geführt wird.

3. Vorrichtung nach einem der vorhergehenden Ansprüche, wobei das untere Ende der Emulgiervorrichtungswelle einen Verschlussstopfen (90) aufweist, der dazu ausgebildet ist, in der geschlossenen Position über eine Tiefe größer als 1 mm in die Ausgangsöffnung des Trichters einzudringen.

4. Vorrichtung nach einem der vorhergehenden Ansprüche, wobei das untere Ende der Emulgiervorrichtungswelle Flügel (96) trägt, die dazu ausgebildet sind, in der offenen Position die Bildung von Wirbeln beim Strömen eines Gemischs aus Zutaten, das im Trichter enthalten ist, durch die Ausgangsöffnung des Trichters zu begrenzen.

5. Vorrichtung nach Anspruch 3, wobei Anspruch 2 gilt, aufweisend ein Wälzlager, dessen Außenring von einem Mantel des Verschlussstopfens gehalten wird, wobei die Reibung des Verschlussstopfens am Trichter und die Reibung des Mantels am Außenring dafür geeignet sind, in der geschlossenen Position den Außenring bezogen auf den Trichter zu fixieren.

6. Vorrichtung nach einem der vorhergehenden Ansprüche, wobei die Emulgiervorrichtungswelle entsprechend der Achse der Emulgiervorrichtungswelle mittels einer Befestigung, die durch einen Zug an der Emulgiervorrichtungswelle entsprechend deren Achse deaktivierbar ist, translatorisch mit der Antriebswelle gekoppelt ist.

7. Vorrichtung nach einem der vorhergehenden Ansprüche, wobei der Trichter eine Schüssel (48) und einen Deckel (50) zum Verschließen der Schüssel, der abnehmbar an der Schüssel befestigt ist und von einer Öffnung (102) durchquert wird, aufweist, wobei das obere Ende der Emulgiervorrichtungswelle wenigstens teilweise in der Öffnung untergebracht ist, ganz gleich, welche von der geschlossenen Position und der offenen Position die Position der Emulgiervorrichtungswelle ist, wobei die Öffnung eine Form aufweist, die zum oberen Ende im Wesentlichen komplementär ist.

8. Vorrichtung nach dem unmittelbar vorhergehenden Anspruch, wobei der Deckel Hülsen (54) definiert, die in einer zusammengesetzten Position des Trichters jeweils in einen Aufnahmeausgang einer jeweiligen Anordnung eingeführt sind und durch ein Entleerungsventil des Behälters mit dem Inneren eines Behälters in Fluidverbindung stehen, der in der Aufnahme untergebracht ist.

9. Vorrichtung nach dem unmittelbar vorhergehenden Anspruch, wobei die Schüssel einen Schieber aufweist und der Sockel eine Schiene aufweist, die sich parallel zur Achse der Hülsen erstreckt, die dazu ausgebildet ist, durch Zusammenwirkung mit dem Schieber die Einführung der Hülsen in die jeweiligen Aufnahmeausgänge zu führen.

10. Vorrichtung nach einem der vorhergehenden Ansprüche, aufweisend eine Platine und für jede Aufnahme eine Antenne (44), die zum kontaktlosen Lesen einer Marke (42) eines Behälters geeignet ist, der in der Aufnahme angeordnet ist, wobei die Antenne auf einem Substrat (126) befestigt ist, das durch ein Scharnier (128) mit der Platine verbunden ist.

11. Vorrichtung nach einem der vorhergehenden Ansprüche, wobei die Mittel zum Übertragen einer Zutat aus einem Behälter, der in einer Aufnahme angeordnet ist, eine Druckpumpe aufweisen, deren Ausgang mit dem Inneren des Behälters in Fluidverbindung steht.

## Claims

1. Appliance for making a drink individually, said appliance comprising:
- a base (1) comprising a storage rack (8) defining a plurality of housings (14), each housing being configured to receive a respective removable container (16) containing an ingredient of said drink, and being provided with a housing outlet (47);
- a funnel (18) removably mounted on the base, under the housing outlets, and comprising an outlet orifice (64);
- means for transferring (22) into the funnel, through the housing outlets of said housings, ingredients contained in the containers housed in said housings;
- a shutter that is movable between a closed position and an open position in which it, respectively, tightly closes and leaves at least partially free, the outlet orifice of the funnel;
- an actuator mechanically coupled to the shutter to displace it between said open and closed positions;
- an emulsifier (66) comprising an emulsifying shaft (68) of axis X comprising a bottom end (84) disposed inside the funnel and a top end (80);
- a motor (70) driving the emulsifier shaft in rotation about the axis X, comprising a driveshaft (72) mechanically coupled to the top end of the emulsifier shaft;
- a control module (20) capable of controlling, according to a desired composition of said drink, the drive motor, the transfer means and the actuator;
the emulsifier shaft being mounted to be movable in translation along its axis so as to form the shutter.

2. Appliance according to the preceding claim, wherein the emulsifier shaft bears a bearing (86) of axis X in which, in the closed position only, the bottom end of the emulsifier shaft is guided in rotation.

3. Appliance according to either one of the preceding claims, wherein the bottom end of the emulsifier shaft bears a closing plug (90) designed to, in the closed position, enter into the outlet orifice of the funnel to a depth greater than 1 mm.

4. Appliance according to any one of the preceding claims, wherein the bottom end of the emulsifier shaft bears fins (96) designed to limit, in the open position, the formation of eddies in the flow, through the outlet orifice of the funnel, of a mixture of ingredients contained in the funnel.

5. Appliance according to Claim 3, Claim 2 being applicable, comprising a rolling bearing whose external ring is held by a skirt of the closing plug, the friction of the closing plug on the funnel and the friction of the skirt on the external ring being suitable to, in the closed position, immobilize the external ring with respect to the funnel.

6. Appliance according to any one of the preceding claims, wherein the emulsifier shaft is coupled in translation, along the axis of the emulsifier shaft, with the driveshaft by means of an attachment that can be deactivated by a pull on the emulsifier shaft along its axis.

7. Appliance according to any one of the preceding claims, wherein the funnel comprises a bowl (48) and a cover (50) for closing the bowl, fixed removably to the bowl and passed through by an opening (102), the top end of the emulsifier shaft being housed, at least partially, in the opening regardless of the position of the emulsifier shaft between the closed position and the open position, the opening having a form that substantially complements said top end.

8. Appliance according to the immediately preceding claim, wherein the cover defines pillars (54), which, in an assembled position of the funnel, are each inserted into a housing outlet of a respective housing, and fluidically connected with the interior of a container housed in said housing, through a drain valve of said container.

9. Appliance according to the immediately preceding claim, wherein the bowl comprises a runner and the base comprises a rail, extending parallel to the axis of said pillars, designed to guide, by cooperation with the runner, the insertion of the pillars in the respective housing outlets.

10. Appliance according to any one of the preceding claims, comprising an electronic circuit board and, for each housing, an antenna (44) suitable for contactlessly reading a marker (42) of a container disposed in said housing, said antenna being fixed onto a substrate (126) linked to the electronic circuit board by a hinge (128).

11. Appliance according to any one of the preceding claims, wherein the means for transferring an ingredient out of a container disposed in a housing comprise a pressurizing pump whose outlet is fluidically connected with the interior of said container.
